# EUROPÄISCHE PATENTSCHRIFT

(11) **EP 3 039 702 B1**
(45) Veröffentlichungstag und Bekanntmachung des Hinweises auf die Patenterteilung: **27.12.2017**
(21) Anmeldenummer: 14798699.6
(22) Anmeldetag: 04.11.2014
(51) Int. Cl.: H01H 27/00, F16P 3/08, H01H 3/16

(54) **VORRICHTUNG ZUM LÖSBAREN ARRETIEREN UND SIGNALISIEREN EINES VORGEBBAREN ZUSTANDES EINER SCHUTZEINRICHTUNG EINER MASCHINE ODER DERGLEICHEN, INSBESONDERE SICHERHEITSSCHALTER**
DEVICE FOR DETACHABLE LOCKING AND SIGNALING A DEFINABLE STATE OF A PROTECTIVE DEVICE FOR A MACHINE OR THE LIKE, ESPECIALLY SAFETY SWITCH
DISPOSITIF DE VERROUILLAGE DÉTACHABLE ET DE SIGNALISATION D'UN ETAT DÉFINISSABLE D'UN DISPOSITIF DE PROTECTION POUR UNE MACHINE OU SIMILAIRES, EN PARTICULIER INTERRUPTEUR DE SÉCURITÉ

(30) Priorität: 14.11.2013 DE 102013019151
(43) Veröffentlichungstag der Anmeldung: 06.07.2016
(73) Patentinhaber: EUCHNER GmbH + Co. KG, 70771 Leinfelden-Echterdingen (DE)
(72) Erfinder: SIEFERT, Timo, 70771 Leinfelden-Echterdingen (DE); GRIMM, Ilo, 71111 Waldenbuch (DE); KRAUS, Matthias, 73760 Ostfildern (DE)
(74) Vertreter: Ruckh, Rainer Gerhard
(86) Internationale Anmeldenummer: PCT/EP2014/002950
(87) Internationale Veröffentlichungsnummer: WO 2015/070957

(56) Entgegenhaltungen:
- EP-A1- 1 071 214
- EP-A1- 1 171 897
- DE-A1-102009 059 050
- US-A1- 2005 160 777

## Beschreibung

Die vorliegende Erfindung betrifft eine Vorrichtung zum lösbaren Arretieren und Signalisieren eines vorgebbaren Zustandes einer Schutzeinrichtung einer Maschine oder dergleichen, insbesondere einen Sicherheitsschalter.

Sicherheitsschalter werden beispielsweise zum Überwachen des Zustandes einer Schutzeinrichtung einer Maschine eingesetzt, etwa zum Überwachen des geschlossenen Zustandes einer Schutztür eines Schutzraumes für eine Werkzeugmaschine oder einen Industrieroboter. Im geschlossenen Zustand der Schutzeinrichtung kann der Sicherheitsschalter ein Freigabesignal für den Betrieb der Maschine bereitstellen. Beim Öffnen der Schutzeinrichtung unterbricht der Sicherheitsschalter mit der die hierfür geltenden Vorschriften erfüllenden Sicherheit, beispielsweise mechanisch zwangsgeführt oder durch geeignete Redundanz der Steuer- und Schaltelektronik, einen oder mehrere Stromkreise. Das Freigabesignal wird daraufhin nicht mehr bereitgestellt. Die zugehörige Maschine kann daraufhin in einen sicheren Betriebszustand überführt werden, beispielsweise abgeschaltet werden, oder das Einschalten der Maschine kann verhindert werden.

In einigen Anwendungsfällen ist es erforderlich, dass der geschlossene Zustand der Schutzeinrichtung lösbar arretierbar ist, beispielsweise wenn in einem Betriebszustand der Maschine verhindert werden soll, dass die Schutzeinrichtung geöffnet werden kann; erst nach Stillstand der Maschine wird die Arretierung aufgehoben und die Schutzeinrichtung kann geöffnet werden, beispielsweise ein an einem beweglichen Teil der Schutzeinrichtung festgelegter Betätiger aus einer an einem feststehenden Teil der Schutzeinrichtung festgelegten Betätigeraufnahme herausgeführt werden.

Aus der DE 199 17 211 C1 ist eine Vorrichtung bekannt, bei welcher der Betätiger beim Schließen der Schutzeinrichtung in eine Betätigeraufnahme einführbar ist und dort im Hinblick auf eine Lateralbewegung arretiert ist, wodurch der geschlossene Zustand der Schutzeinrichtung arretiert ist. Durch ein Entsperrmittel ist der Betätiger anhebbar und damit die Arretierung lösbar bzw. aufhebbar und die Schutzeinrichtung kann wieder geöffnet werden. An dem Betätiger ist seitlich ein Signalmittel angebracht, das drahtlos in Wirkverbindung mit einem weiteren Signalmittel an einer Seitenwand der Betätigeraufnahme ist, sobald der Betätiger in seiner arretieren Position ist, woraufhin die Vorrichtung die geschlossene und arretierte Position der Schutzeinrichtung signalisieren kann.

Die DE 10 2009 059 050 A1 betrifft ein Zuhaltesystem für eine Vorrichtung zum Überwachen des Zustandes einer Schutzeinrichtung einer Maschine, wobei die Vorrichtung einen Lesekopf und einen Betätiger aufweist, die beim Schließen der Schutzeinrichtung zusammenführbar sind und dadurch die Vorrichtung betätigen. Das Zuhaltesystem weist eine Magneteinrichtung auf, durch die eine Magnetkraft bereitstellbar ist, mit welcher der Betätiger und der Lesekopf im zusammengeführten Zustand arretierbar sind und dadurch die Schutzeinrichtung zuhaltbar ist. Das Zuhaltesystem weist einen Sensor auf, der an oder nahe einem den magnetischen Fluss gut leitenden Element angeordnet ist, und der Sensor das Erreichen einer vorgebbaren Arretierungskraft detektiert. Das den magnetischen Fluss gut leitende Element weist aufgrund seiner Form und/oder seines Werkstoffs oberhalb eines die vorgebbare Arretierungskraft bereitstellenden Wertes des magnetischen Flusses magnetische Sättigungserscheinungen auf, durch welche der magnetische Widerstand des Elements derart erhöht ist, dass dadurch die magnetische Feldstärke im Bereich des Sensors erhöht ist. Dieser Zustand ist von dem Sensor als das Erreichen der vorgebbaren Arretierungskraft signalisierbar.

Die US 2005 / 0160777 A1 betrifft ein Zuhaltesystem eines Sicherheitsschalters mit einem Lesekopf und einem Betätiger, die jeweils eine erste bzw. zweite Baugruppe mit elektrischen und/oder elektronischen Bauelementen aufweisen, die elektrisch kontaktlos in Wechselwirkung miteinander bringbar sind und dadurch den Sicherheitsschalter steuern. Der Betätiger ist am Lesekopf mittels eines mit einem Gegenelement zusammenwirkenden schaltbaren Elektromagneten zuhaltbar. Mittels eines Sensorelements, dessen Ausgangssignal anhängig ist von dem durch den Elektromagneten generierbaren Magnetfeld, ist die Zuhaltung kontrollierbar.

Ein Problem der bekannten Vorrichtungen ist, dass der Ansprechbereich für die Signalmittel so gestaltet werden muss, dass beispielsweise das als Transponer ausgestaltete Signalmittel des Betätigers selbst unter ungünstigen (worst-case) Bedingungen nur im arreierten Zustand des Betätigers erkannt wird. Dies erfordert, dass die Geometrie und Größe der Betätigeraufnahme, die beispielsweise als Zuhaltesenke ausgestaltet sein kann, an den Ansprechbereich der Signalmittel angepasst sein muss, wodurch sich auch für die Auslegung der Elektronik und die mechanische Konstruktion Nachteile ergeben, beispielsweise müssen vergleichsweise enge mechanische und elektrische Toleranzen eingehalten werden, die auch eine Anpassung der Konstruktion an die Einbaugegebenheiten bzw. Steuerungsumgebungen erschweren. Hinzu kommt, dass eine Verbesserung der Reichweite des drahtlosen Signalaustausches im Hinblick auf den durch die DIN EN 60947-5-3 geforderten gesicherten Ausschaltabstand (SAR-Abstand, Secure Assured Release Distance) nicht möglich ist.

Der vorliegenden Erfindung liegt daher die Aufgabe zugrunde, eine gattungsgemäße Vorrichtung bereitzustellen, die weiter verbesserte Gebrauchseigenschaften aufweist. In einer Ausführungsart soll die Betriebssicherheit noch weiter erhöht sein, insbesondere soll zuverlässig ausgeschlossen werden, dass der Sicherheitsschalter beispielsweise aufgrund des Ausfalls elektronischer Bauteile oder aufgrund von Manipulationsversuchen die Arretierung des Betätigers und damit den geschlossenen und arretierten Zustand der Schutzeinrichtung einer Maschine signalisiert, obgleich der Betätiger nicht ordnungsgemäß an dem Sicherheitsschalter positioniert bzw. arretiert ist. Die Vorrichtung und/oder der Betätiger sollen vorzugsweise eine möglichst kompakte Bauform aufweisen.

Die Aufgabe ist durch die im Anspruch 1 bestimmte Vorrichtung gelöst. Besondere Ausführungsarten der Erfindung sind in den Unteransprüchen und der nachfolgenden Beschreibung bestimmt.

In einer Ausführungsart betrifft die Erfindung eine Vorrichtung zum lösbaren Arretieren und Signalisieren eines vorgebbaren Zustandes einer Schutzeinrichtung einer Maschine oder dergleichen, insbesondere einen die für derartige Anwendungen geltenden Sicherheitsvorschriften und Sicherheitsnormen erfüllenden Sicherheitsschalter, wobei die Vorrichtung eine Betätigeraufnahme aufweist zum Aufnehmen eines an der Einrichtung festlegbaren Betätigers. Die Betätigeraufnahme weist ein erstes Signalmittel auf, das in dem arretierten Zustand der Einrichtung drahtlos in Wirkverbindung mit einem zweiten Signalmittel des Betätigers ist und dadurch der arretierte Zustand für die Vorrichtung detektierbar und signalisierbar ist. In Weiterbildung der bekannten Vorrichtung weist die Vorrichtung ein Antriebsmittel auf, durch welches der Betätiger unter Beibehaltung des arretierten Zustandes der Einrichtung relativ zur Betätigeraufnahme bewegbar ist. Die Vorrichtung ermittelt, ob eine der Relativbewegung entsprechende Veränderung des die Wirkverbindung zwischen dem ersten Signalmittel der Betätigeraufnahme und dem zweiten Signalmittel des Betätigers repräsentierenden Signals feststellbar ist.

Der Raumbereich, in dem die drahtlose Wirkverbindung zwischen den beiden Signalmitteln möglich ist, beispielsweise der Erkennungsbereich eines sogenannten Transponders in dem Betätiger, kann größer gestaltet sein als der Bereich der Arretierung des Betätigers, da über die Veränderung des die Wirkverbindung repräsentierenden Signals für die Vorrichtung feststellbar ist, ob der Betätiger an der Betätigeraufnahme arretiert ist und damit beispielsweise eine sichere Zuhaltung der Schutzeinrichtung der Maschine gewährleistet ist. Das Antriebsmittel kann den Betätiger in einer Richtung bewegen, die der Einführrichtung des Betätigers in die Betätigeraufnahme entgegengesetzt ist.

Durch die erfindungsgemäße Vorrichtung ergibt sich der Vorteil, dass der Raumbereich der Wirkverbindung zwischen den Signalmitteln, beispielsweise der Ansprechbereich für einen an dem Betätiger festgelegten Transponder, nicht mehr unbedingt nur innerhalb des Bereichs der Arretierung des Betätigers und damit beispielsweise des sicheren Zuhaltung der Schutzeinrichtung der Maschine liegen muss. Dadurch lassen sich andere Geometrien des Zuhaltebereichs realisieren, die beispielsweise besser an den jeweiligen Anwendungsfall angepasst sind, etwa für Schwenktüren oder Schiebetüren gleichermaßen geeignet sind. Außerdem können verschiedene konstruktive Auslegungen der Vorrichtung weiter verbessert werden, beispielsweise lassen sich andere Konzepte bezüglich der Abdichtung des Antriebsmittels bzw. des Auswerfers für den Betätiger aus der Betätigeraufnahme realisieren.

In einer Ausführungsart weist die Vorrichtung einen Auswerfer auf, mittels dem der Betätiger aus der Betätigeraufnahme herausführbar ist und dadurch der arretierte Zustand der Erfindung aufhebbar ist. Der Auswerfer ist dabei auch das Antriebsmittel für die Relativbewegung zwischen dem Betätiger und der Betätigeraufnahme, wobei für die Relativbewegung der Auswerfer den Betätiger nicht in dem Umfang bewegt, wie es für ein Auswerfen aus der Betätigeraufnahme erforderlich ist, so dass der arretierte Zustand während der Relativbewegung weiter gewährleistet ist.

In einer Ausführungsart ist das Antriebsmittel linear bewegbar und/oder das Antriebsmittel kann beispielsweise durch den Anker eines Hubmagneten gebildet sein. Der Betätiger kann dabei beispielsweise durch die auf ihn wirkende Gravitationskraft und/oder Federkraft belastet in der Betätigeraufnahme vorgespannt sein, so dass das Antriebsmittel die zugehörige Vorspannkraft überwinden muss. In einer alternativen Ausführungsart kann der Antrieb auch elektromotorisch, beispielsweise über einen Zahnstangenantrieb, durch einen Linearmotor, durch einen piezoelektrischen Antrieb, durch einen magnetostriktiven Antrieb oder auf sonstige geeignete Weise bereitgestellt werden. Die vorstehend ausdrücklich genannten Antriebsmechanismen erlauben eine platzsparende und/oder energiesparende Antriebsmöglichkeit.

In einer Ausführungsart weist die Vorrichtung eine Messeinrichtung auf zum Ermitteln der Position des Antriebsmittels, insbesondere der Position des Antriebsmittels in Bezug auf die Betätigeraufnahme. In vielen Anwendungsfällen kann eine magnetische Messeinrichtung vorteilhaft sein, beispielsweise unter Verwendung von Hallsensoren oder durch Fluss- und/oder Induktivitätsmessungen. Für bestimmte Anwendungsfälle kann auch eine optische und/oder kapazitive Messeinrichtung vorteilhaft sein, beispielsweise wenn nicht ausgeschlossen werden kann, dass metallische Späne oder sonstige magnetisch wirksame Verunreinigungen im Bereich des Betätigers vorhanden sein können.

In einer Ausführungsart weist das Antriebsmittel eine Anlagefläche auf, an welche der Betätiger im arretierten Zustand der Einrichtung in Anlage ist. Dies erhöht beispielsweise die Güte der Wirkverbindung zwischen den Signalmitteln. Alternativ oder ergänzend kann auch durch weitere Sensoren ermittelt werden, ob das Antriebsmittel in Kontakt mit dem Betätiger ist, d.h. ob sich der Betätiger im arretierten Zustand befindet. Beispielsweise kann die gravitationskraftbelastete oder federkraftbelastete Anlage des Betätigers an dem Antriebsmittel durch einen entsprechenden Sensor, gegebenenfalls auch durch das Positionsmesssystem des Antriebsmittel selbst, erkannt werden, oder es können an der Oberfläche des Antriebsmittels Kontaktsensoren angebracht sein.

In einer Ausführungsart weist das erste Signalmittel eine Ringform auf.
Das Antriebsmittel ist innerhalb der Ringform angeordnet, insbesondere im Zentrum des ersten Signalmittels angeordnet. Das erste Signalmittel kann beispielsweise eine Induktivität sein, insbesondere eine Spule, durch die eine drahtlose Wirkverbindung mit dem zweiten Signalmittel im Betätiger, beispielsweise einem ebenfalls eine Induktivität aufweisenden Transponder, hergestellt werden kann. Das zweite Signalmittel kann im Transponder zentrisch in Bezug auf die Längsachse des Transponders angeordnet sein, so dass die beiden Signalmittel in einer Ausgangsstellung des in die Betätigeraufnahme eingesetzten Betätigers konzentrisch zueinander angeordnet sind. Das zweite Signalmittel kann insbesondere nahe oder an der Stirnfläche des Betätigers angeordnet sein.

In einer Ausführungsart ist das erste Signalmittel in der Betätigeraufnahme, insbesondere in der dem Betätiger nicht-auswerfenden Ausgangsposition des Antriebsmittels, gegenüber einem dem Betätiger zugewandten Ende des Antriebsmittels zurückversetzt angeordnet. Dadurch ist das erste Signalmittel mechanisch geschützt in der Betätigeraufnahme angeordnet. Weiterhin ergibt sich dadurch eine verbesserte Möglichkeit der Abdichtung des Antriebsmittels in Bezug auf die Betätigeraufnahme.

In einer Ausführungsart weist die Betätigeraufnahme eine Sperrflanke auf, mittels welcher der Betätiger in der Betätigeraufnahme durch Formschluss arretierbar ist. Die formschlüssige Arretierung ist auch während der Relativbewegung zwischen dem Betätiger und der Betätigeraufnahme wirksam. Der Formschluss kann insbesondere gegenüber einer Lateralbewegung, bezogen auf das Einführen des Betätigers in die Betätigeraufnahme, gewährleistet sein. Die Sperrflanke kann beispielsweise einen Winkel von maximal 90° mit einer an die Sperrflanke anschließenden Bodenfläche der Betätigeraufnahme einschließen.

In einer Ausführungsart besteht die Wirkverbindung zwischen dem ersten Signalmittel der Betätigeraufnahme und dem zweiten Signalmittel des Betätigers bereits, wenn der Betätiger in der Betätigeraufnahme noch nicht arretiert ist. Dadurch ist die Realisierung eines größeren Ansprechbereichs für die Wirkverbindung möglich, ohne die Sicherheit der Vorrichtung zu beeinträchtigen.

Die Betätigeraufnahme kann eine Ausführschräge aufweisen, über welche der Betätiger aus der Betätigeraufnahme herausführbar ist, insbesondere durch eine Lateralbewegung aus der Betätigeraufnahme herausführbar ist. Dies hat den Vorteil, dass das Antriebsmittel beim Lösen der Arretierung den Betätiger nur bis zur Höhe der Ausführschräge anheben muss, woraufhin der Betätiger durch eine Lateralbewegung aus der Betätigeraufnahme herausführbar ist.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine schematische Draufsicht auf eine Gesamtanordnung einer Einrichtung mit einem Sicherheitsschalter,
- Fig. 2: zeigt eine Seitenansicht auf eine erfindungsgemäße Vorrichtung,
- Fig. 3: zeigt in vergrößerter Darstellung einen Ausschnitt der Fig. 2, und
- Fig. 4: zeigt den Verlauf des Signals S, das die Wirkverbindung der beiden Signalmittel repräsentiert, in Abhängigkeit von der Zeit t.

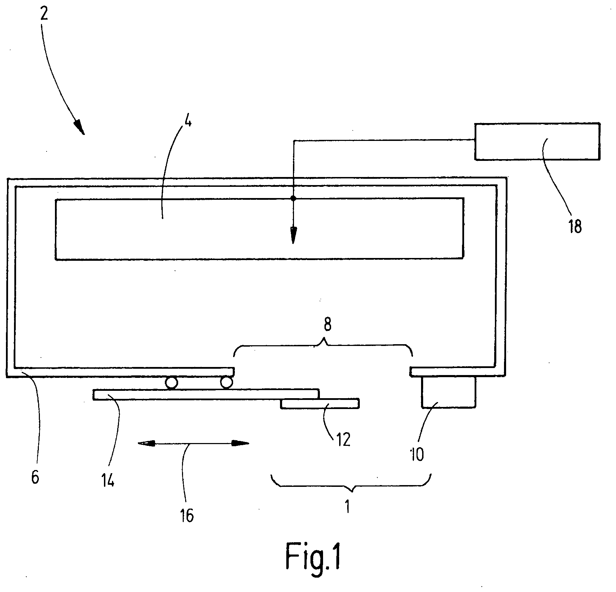

Die Fig. 1 zeigt eine schematische Draufsicht auf eine Gesamtanordnung einer Schutzeinrichtung 2 einer Maschine 4, bei der es sich beispielsweise um eine Werkzeugmaschine oder einen Schweißroboter handeln kann. Die Schutzeinrichtung 2 schützt beispielsweise das Bedienpersonal vor einer Gefährdung durch die im Betrieb befindliche Maschine 4.

Die Schutzeinrichtung 2 weist ein vorzugsweise feststehendes erstes Teil 6 auf, beispielsweise einen Rahmen der Einrichtung 2. Das erste Teil 6 weist eine Öffnung 8 auf, die durch ein zweites Teil 14 der Schutzeinrichtung 2 schließbar ist, beispielsweise durch eine Schutztür, die entsprechend dem Doppelpfeil 16 gegenüber dem ersten Teil 6 bewegbar ist. An der Schutzeinrichtung 2 ist eine erfindungsgemäße Vorrichtung 1 angebracht, im Ausführungsbeispiel ein Sicherheitsschalter, die eine vorzugsweise am feststehenden ersten Teil 6 angeordnete Betätigeraufnahme 10 und einen vorzugsweise am beweglichen zweiten Teil 14 angeordneten Betätiger 12 umfasst. Die Vorrichtung 1 ist mit einer Steuerung 18 verbunden, welche die Maschine 4 steuert.

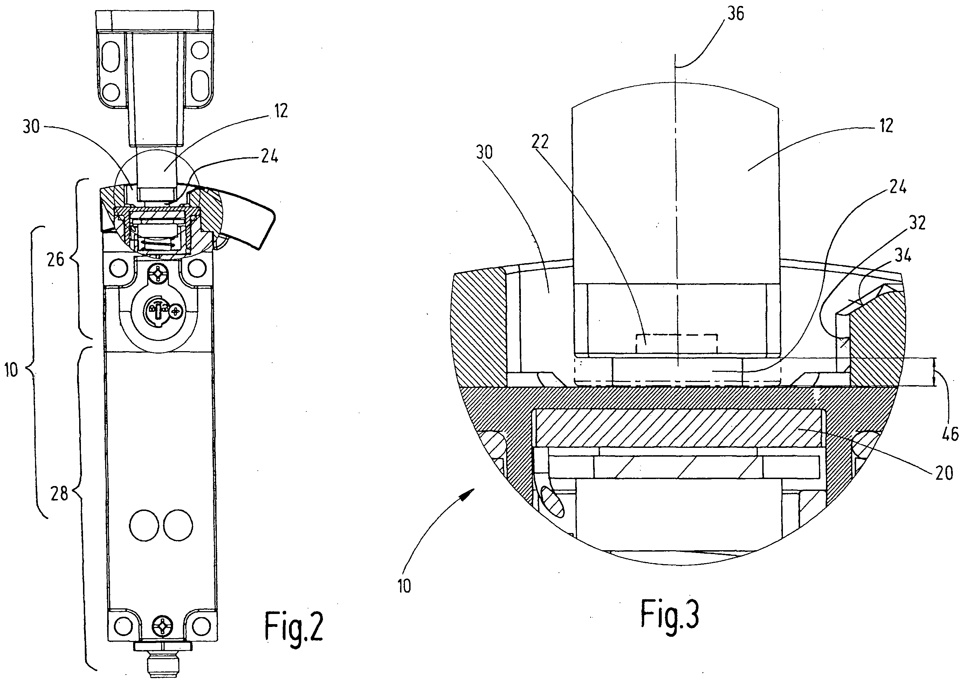

Die Fig. 2 zeigt eine Seitenansicht auf eine erfindungsgemäße Vorrichtung 1 mit dem in die Betätigeraufnahme 10 eingesetzten Betätiger 12 und die Fig. 3 zeigt in vergrößerter Darstellung einen Ausschnitt der Fig. 2 im Bereich des eingesetzten Betätigers 12, wobei der in den Figuren 2 und 3 dargestellte Schnitt durch die Betätigeraufnahme 10 nicht durch deren Zentrum verläuft. Außerdem ist in den Figuren 2 und 3 der Betätiger 12 in einer durch das Antriebsmittel 24 leicht angehobenen Position dargestellt, entsprechend der durch das Antriebsmittel 24 hervorgerufenen Relativbewegung zwischen dem Betätiger 12 und der Betätigeraufnahme 10. In der Fig. 3 ist gestrichelt die Ausgangsposition des in die Betätigeraufnahme 10 vollständig eingesetzten Betätigers 12 dargestellt.

Die Betätigeraufnahme 10 umfasst einen Kopfabschnitt 26 und einen Schalterabschnitt 28, in dem beispielsweise eine Schalterelektronik untergebracht ist, die mit der Steuerung 18 verbunden werden kann.
Der Kopfabschnitt 26 weist eine beispielsweise im Wesentlichen hohlzylindrische Aufnahmeöffnung 30 oder Zuhaltesenke für den Betätiger 12 auf, wobei die Kontur oder Querschnittskontur der Aufnahmeöffnung 30 an die Kontur des Betätigers 12 angepasst sein kann und insbesondere rund oder polygonal sein kann. Mindestens eine Seitenwand der Aufnahmeöffnung 30 bildet eine Sperrflanke 32, mittels welcher der Betätiger 12 in der Aufnahmeöffnung 30 in Bezug auf eine Lateralbewegung, in der Darstellung der Figuren 2 und 3 beispielsweise nach links, durch Formschluss arretiert ist. Wie insbesondere aus der Fig. 3 hervorgeht, ist diese Arretierung aufgrund der Sperrflanke 32 auch in einer durch das Antriebsmittel 24 angehobenen Position des Betätigers 12 gewährleistet.

Die Aufnahmeöffnung 30 weist an mindestens einer Seite eine Ausführschräge 34 auf, über welche der Betätiger 12 aus der Aufnahmeöffnung 30 herausführbar ist, sofern der Betätiger 12 ausreichend hoch angehoben ist, so dass er im Falle einer Lateralbewegung nicht an der Sperrflanke 32 in Anlage kommt, sondern über die Ausführschräge 34 aus der Aufnahmeöffnung 30 hinausgleiten kann.

Die Betätigeraufnahme 10 weist ein im Wesentlichen zentrisch in Bezug auf die Aufnahmeöffnung 30 angeordnetes erstes Signalmittel 20 in Form einer Spule auf. Der Betätiger 12 weist an seinem der Betätigeraufnahme 10 zugewandten, vorzugsweise planen stirnförmigen Ende zentrisch in Bezug auf seine Längsachse 36 ein zweites Signalmittel 22 auf. In der in den Figuren 2 und 3 dargestellten Position sind das erste Signalmittel 20 und das zweite Signalmittel 22 in Wirkverbindung miteinander. Beispielsweise kann das erste Signalmittel 20 ein elektromagnetisches Feld erzeugen, das durch das zweite Signalmittel 22 entsprechend einem Informationsträger des Betätigers 12 oder in sonstiger Form reproduzierbar modulierbar ist, was wiederum auf Seiten der Betätigeraufnahme 10 detektierbar ist. Insbesondere kann das zweite Signalmittel 22 als sogenannter Transponder ausgebildet sein, beispielsweise durch ein Radio Frequency Identification Element (RF-ID Tag) gebildet sein, so dass die Betätigeraufnahme 10 detektieren kann, ob ein zugelassener Betätiger 12 anwesend ist. Der Ansprechbereich des ersten Signalmittels 20 kann dabei auch einen Bereich umfassen, in dem der Betätiger 12 noch nicht an der Betätigeraufnahme 10 arretiert ist.

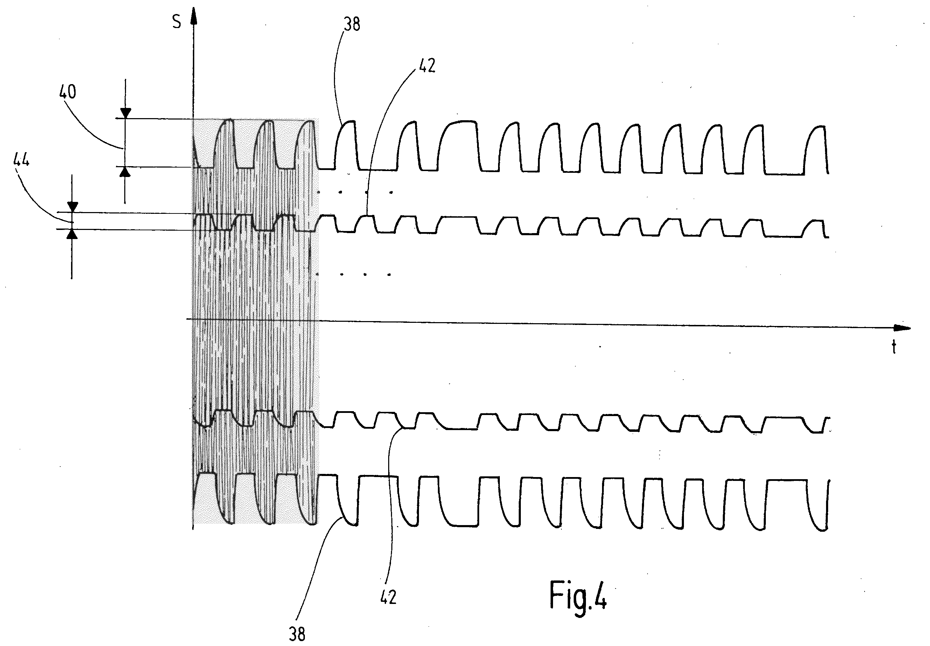

Die Figur 4 zeigt den Verlauf des Signals S, das die Wirkverbindung der beiden Signalmittel 20, 22 repräsentiert, in Abhängigkeit von der Zeit t. In der in den Figuren 2 und 3 dargestellten Position ist der Betätiger 12 in Anlage an dem Antriebsmittel 24, das durch den Anker eines Elektromagneten gebildet sein kann. Die Position des Antriebsmittels 24 in Bezug auf die Betätigeraufnahme 10 kann auf verschiedene Weise ermittelt werden, beispielsweise optisch, induktiv oder kapazitiv. Im Ausgangszustand schließt das Antriebsmittel 24 mit seinem stirnseitigen Ende plan mit der Bodenfläche der Aufnahmeöffnung 30 ab oder ist sogar gegenüber der Bodenfläche zurückversetzt. In diesem Zustand ist der Abstand zwischen den beiden Signalmitteln 20, 22 minimal, und es stellt sich demzufolge der in der Fig. 4 dargestellte Signalverlauf mit der ersten Einhüllenden 38 ein, die neben einem Gleichanteil einen ersten Wechselsignalanteil 40 aufweist, dessen Einhüllende beispielsweise eine Folge von logischen Signalpegeln 0 und 1 bildet, die eine Identifikation des zweiten Signalmittels 22 und damit des Betätigers 12 erlaubt.

In der in den Figuren 2 und 3 dargestellten Position ist das Antriebsmittel 24 ein Stück weit aus seiner in der Fig. 3 gestrichelt dargestellten Ausgangsstellung angehoben. Dementsprechend wurde der Betätiger 12 relativ zu der Betätigeraufnahme 10 bewegt und der Abstand zwischen den beiden Signalmitteln 20, 22 hat sich gegenüber der Ausgangsstellung vergrößert. Dementsprechend ändert sich auch der Signalverlauf, und es stellt sich die in der Fig. 4 dargestellte zweite Einhüllende 42 mit einem zweiten Wechselsignalanteil 44 ein. Der Quotient aus dem zweiten Wechselsignalanteil 44 und dem ersten Wechselsignalanteil 40 ist dabei um mehr als 20 % geringer als der Quotient aus dem Gleichanteil der ersten Einhüllenden 38 und dem Gleichanteil der zweiten Einhüllenden 42.

Für die Vorrichtung 1 ist dadurch ermittelbar, ob durch das Ausfahren des Antriebsmittels 24 auch der Betätiger 12 in entsprechender Weise bewegt wurde. In einer Ausführungsart hat die Vorrichtung 1 eine Erwartungshaltung, dass sich das die Wirkverbindung zwischen dem ersten Signalmittel 20 und dem zweiten Signalmittel 22 repräsentierende Signal S in vorbestimmter Weise ändert, wenn das Antriebsmittel 24 um einen vorbestimmten Weg ausgefahren wird oder wenn das Antriebsmittel 24 eine bestimmte Position einnimmt, was jeweils durch ein die Position des Antriebsmittels 24 bestimmendes Messsystem der Vorrichtung 1 ermittelbar ist. Während die bekannten Vorrichtungen lediglich erkennen, ob das zweite Signalmittel 22 und damit ein zugelassener Betätiger 12 in Reichweite des ersten Signalmittels 20 ist, kann die erfindungsgemäße Vorrichtung detektieren, ob sich der Betätiger 12 auch tatsächlich in einer Position befindet, die eine Arretierung des Betätigers 12 und damit beispielsweise eine Arretierung eines sicheren Zustandes der Schutzeinrichtung 2 vorliegt.

Eine dahingehende Überprüfung kann automatisiert in vorgegebenen Zeitabständen oder zu bestimmten Anlässen erfolgen, beispielsweise einmal pro Sekunde und/oder immer beim Anfahren der Maschine 4, indem der Betätiger 12 um den in den Figuren 2 und 3 dargestellten Weg 46 angehoben wird, der weniger als 60 %, insbesondere weniger als 40 % des Weges beträgt, der für ein Herausführen des Betätigers 12 aus der Aufnahmeöffnung 30 und damit aus der Betätigeraufnahme 10, beispielsweise in der Darstellung der Fig. 3 nach rechts, erforderlich ist.

In einer Ausführungsart kann die Vorrichtung 1 ein Wegmesssystem für das Antriebsmittel 24 aufweisen, mittels dem die Position des Antriebsmittels 24 ermittelbar ist. In der Vorrichtung 1 kann beispielsweise in Tabellenform abgespeichert sein, welcher Verlauf, beispielsweise welche Amplitudenwerte, für das die Wirkverbindung zwischen den beiden Signalmitteln 20, 22 repräsentierende Signal S in Abhängigkeit der Position des Antriebsmittels 24 erwartet wird. Diese Referenzwerte oder Erwartungswerte können beispielsweise für jeden Betätiger 12 individuell eingelernt werden. Im späteren Betrieb erwartet dann die Vorrichtung 1 entsprechend der gemessenen Position des Antriebsmittels 24 einen entsprechenden Verlauf des Signals S. Sollte sich dieser nicht einstellen, kann die Vorrichtung 1 dies signalisieren, beispielsweise durch eine entsprechende Fehlermeldung, oder die Maschine 4 sogar mittels der Steuerung 18 in einen sicheren Betriebszustand überführen.

## Patentansprüche

1. Vorrichtung (1) zum lösbaren Arretieren und Signalisieren eines vorgebbaren Zustandes einer Schutzeinrichtung (2) einer Maschine (4), wobei die Vorrichtung (1) eine Betätigeraufnahme (10) aufweist zum Aufnehmen eines an der Schutzeinrichtung (2) festlegbaren Betätigers (12), und wobei die Betätigeraufnahme (10) ein erstes Signalmittel (20) aufweist, das in dem arretierten Zustand der Einrichtung (2) drahtlos in Wirkverbindung mit einem zweiten Signalmittel (22) des Betätigers (12) ist und dadurch der arretierte Zustand für die Vorrichtung (1) detektierbar und signalisierbar ist, **dadurch gekennzeichnet, dass** die Vorrichtung (1) ein Antriebsmittel (24) aufweist, durch welches der Betätiger (12) unter Beibehaltung des arretierten Zustandes des Schutzeinrichtung (2) relativ zur Betätigeraufnahme (10) bewegbar ist, und dass diese Relativbewegung durch eine Veränderung der Wirkverbindung zwischen dem ersten Signalmittel (20) der Betätigeraufnahme (10) und dem zweiten Signalmittel (22) des Betätigers (12) über ein repräsentierendes Signal feststellbar ist.

2. Vorrichtung nach Anspruch 1, **dadurch gekennzeichnet dass**, diese als Sicherheitsschalter ausgebildet wird.

3. Vorrichtung nach Anspruch 1 oder 2, **dadurch gekennzeichnet dass**, das erste Signalmittel (20) ein elektromagnetisches Feld erzeugt, welches durch das in Wirkverbindung mit dem ersten Signalmittel (20) stehenden zweiten Signalmittel (22) moduliert ist.

4. Vorrichtung nach Anspruch 3, **dadurch gekennzeichnet dass**, das erste Signalmittel (20) von einer Spule gebildet ist, und dass das zweite Signalmittel (22) ein Transponder ist.

5. Vorrichtung (1) nach einem der Ansprüche 1-4, **dadurch gekennzeichnet, dass** die Vorrichtung (1) einen Auswerfer aufweist, mittels dem der Betätiger (12) aus der Betätigeraufnahme (10) herausführbar und dadurch der arretierte Zustand der Schutzeinrichtung (2) aufhebbar ist, und dass der Auswerfer auch das Antriebsmittel (24) für die Relativbewegung zwischen dem Betätiger (12) und der Betätigeraufnahme (10) ist.

6. Vorrichtung (1) nach einem der Ansprüche 1-5, **dadurch gekennzeichnet, dass** das Antriebsmittel (24) linear bewegbar ist.

7. Vorrichtung (1) nach einem der Ansprüche 1-6, **dadurch gekennzeichnet, dass** das Antriebsmittel (24) durch den Anker eines Hubmagneten gebildet ist

8. Vorrichtung (1) nach einem der Ansprüche 1-7, **dadurch gekennzeichnet, dass** die Vorrichtung (1) eine Messeinrichtung aufweist zum Ermitteln der Position des Antriebsmittels (24).

9. Vorrichtung (1) nach einem der Ansprüche 1 - 8, **dadurch gekennzeichnet, dass** das Antriebsmittel (24) eine Anlagefläche aufweist, an welche der Betätiger (12) im arretierten Zustand der Schutzeinrichtung (2) in Anlage ist.

10. Vorrichtung (1) nach einem der Ansprüche 1-9, **dadurch gekennzeichnet, dass** das erste Signalmittel (20) eine Ringform aufweist, und dass das Antriebsmittel (24) innerhalb der Ringform angeordnet ist.

11. Vorrichtung nach Anspruch 11, **dadurch gekennzeichnet dass**, das Antriebsmittel im Zentrum des ersten Signalmittels (20) angeordnet ist.

12. Vorrichtung (1) nach einem der Ansprüche 1 - 11, **dadurch gekennzeichnet, dass** das erste Signalmittel (20) in der Betätigeraufnahme (10) gegenüber einem dem Betätiger (12) zugewandten Ende des Antriebsmittels (24) zurückversetzt angeordnet ist.

13. Vorrichtung (1) nach einem der Ansprüche 1 - 12, **dadurch gekennzeichnet, dass** die Betätigeraufnahme (10) eine Sperrflanke (32) aufweist, mittels welcher der Betätiger (12) in der Betätigeraufnahme (10) durch Formschluss arretierbar ist, und dass die formschlüssige Arretierung auch während der Relativbewegung zwischen dem Betätiger (12) und der Betätigeraufnahme (10) wirksam ist

14. Vorrichtung (1) nach einem der Ansprüche 1 - 13, **dadurch gekennzeichnet, dass** die Wirkverbindung zwischen dem ersten Signalmittel (20) der Betätigeraufnahme (10) und dem zweiten Signalmittel (22) des Betätigers (12) bereits besteht, wenn der Betätiger (12) in der Betätigeraufnahme (10) noch nicht arretiert ist.

## Claims

1. Device (1) for releasable locking and signalling of a predeterminable state of protective equipment (2) of a machine (4), wherein the device (1) comprises an actuator mount (10) for mounting an actuator (12) fixable to the protective equipment (2) and wherein the actuator mount (10) comprises first signalling means (20) which in the locked state of the equipment (2) is in wire-free operative connection with second signalling means (22) of the actuator (12) and the locked state for the device (1) can thereby be detected and signalled, **characterised in that** the device (1) comprises drive means (24) by which the actuator (12) with maintenance of the locked state of the protective equipment (2) is movable relative to the actuator mount (10) and that this relative movement is detectable by way of a representative signal through a change in the operative connection between the first signalling means (20) of the actuator mount (10) and the second signalling means (22) of the actuator (12).

2. Device according to claim 1, **characterised in that** this is constructed as a safety switch.

3. Device according to claim 1 or 2, **characterised in that** the first signalling means (20) generates an electromagnetic field which is modulated by the second signalling means (20) in operative connection with the first signalling means (20).

4. Device according to claim 3, **characterised in that** the first signalling means (20) is formed by a coil and the second signalling means (22) is a transponder.

5. Device (1) according to any one of claims 1 to 4, **characterised in that** the device (1) is an ejector by means of which the actuator (12) can be led out of the actuator mount (10) and the locked state of the protective equipment (2) can thereby be cancelled and that the ejector is also the drive means (24) for the relative movement between the actuator (12) and the actuator mount (10).

6. Device (1) according to any one of claims 1 to 5, **characterised in that** the drive means (24) is linearly movable.

7. Device (1) according to any one of claims 1 to 6, **characterised in that** the drive means (24) is formed by the armature of a solenoid.

8. Device (1) according to any one of claims 1 to 7, **characterised in that** the device (1) comprises measuring equipment for determining the position of the drive means (24).

9. Device (1) according to any one of claims 1 to 8, **characterised in that** the drive means (24) has a contact surface with which the actuator (12) in the locked state of the protective equipment (2) is in contact.

10. Device (1) according to any one of claims 1 to 9, **characterised in that** the first signalling means (20) has an annular form and that the drive means (24) is arranged with the annular form.

11. Device according to claim 10, **characterised in that** the drive means is arranged in the centre of the first signalling means (20).

12. Device (1) according to any one of claims 1 to 11, **characterised in that** the first signalling means (20) is arranged in the actuator mount (10) to be recessed relative to an end of the drive means (24) facing the actuator.

13. Device (1) according to any one of claims 1 to 12, **characterised in that** the actuator mount (10) has a blocking flank (32) by means of which the actuator (12) is lockable in the actuator mount (10) by mechanically positive connection and that the mechanically positive locking is also effective during the relative movement between the actuator (12) and the actuator mount (10).

14. Device (1) according to any one of claims 1 to 13, **characterised in that** the operative connection between the first signalling means (20) of the actuator mount (10) and the second signalling means (22) of the actuator mount (12) is present even when the actuator (12) is still not locked in the actuator mount (10).

## Revendications

1. Dispositif (1) de verrouillage libérable et de signalisation d'un état prédéfinissable d'un équipement de protection (2) d'une machine (4), lequel dispositif (1) présente un logement d'actionneur (10) destiné à recevoir un actionneur (12) pouvant être fixé sur l'équipement de protection (2), dans lequel le logement d'actionneur (10) présente un premier moyen de signalisation (20) qui, dans l'état verrouillé de l'équipement (2), est en liaison fonctionnelle sans fil avec un deuxième moyen de signalisation (22) de l'actionneur (12) et permet ainsi au dispositif (1) de détecter et signaler l'état verrouillé, **caractérisé en ce que** le dispositif (1) présente un moyen d'entraînement (24) à l'aide duquel l'actionneur (12) peut être déplacé par rapport au logement d'actionneur (10) tout en maintenant l'état verrouillé de l'équipement de protection (2), et **en ce que** ce déplacement relatif peut être détecté par une modification de la liaison fonctionnelle entre le premier moyen de signalisation (20) du logement d'actionneur (10) et le deuxième moyen de signalisation (22) de l'actionneur (12) par l'intermédiaire d'un signal représentatif.

2. Dispositif selon la revendication 1, **caractérisé en ce que** celui-ci est réalisé sous la forme d'un interrupteur de sécurité.

3. Dispositif selon la revendication 1 ou 2, **caractérisé en ce que** le premier moyen de signalisation (20) génère un champ électromagnétique qui est modulé par le deuxième moyen de signalisation (22) qui est en liaison fonctionnelle avec le premier moyen de signalisation (20).

4. Dispositif selon la revendication 3, **caractérisé en ce que** le premier moyen de signalisation (20) est formé par une bobine et **en ce que** le deuxième moyen de signalisation (22) est un transpondeur.

5. Dispositif (1) selon l'une des revendications 1 à 4, **caractérisé en ce que** le dispositif (1) présente un éjecteur au moyen duquel l'actionneur (12) peut être sorti du logement d'actionneur (10) et de ce fait l'état verrouillé de l'équipement de protection (2) peut être annulé, et **en ce que** l'éjecteur est aussi le moyen d'entraînement (24) pour le déplacement relatif entre l'actionneur (12) et le logement d'actionneur (10).

6. Dispositif (1) selon l'une des revendications 1 à 5, **caractérisé en ce que** le moyen d'entraînement (24) est déplaçable linéairement.

7. Dispositif (1) selon l'une des revendications 1 à 6, **caractérisé en ce que** le moyen d'entraînement (24) est formé par l'induit ou ancre d'un électroaimant de levage.

8. Dispositif (1) selon l'une des revendications 1 à 7, **caractérisé en ce que** le dispositif (1) présente un équipement de mesure pour déterminer la position du moyen d'entraînement (24).

9. Dispositif (1) selon l'une des revendications 1 à 8, **caractérisé en ce que** le moyen d'entraînement (24) présente une surface d'application contre laquelle l'actionneur (12) est appliqué dans l'état verrouillé de l'équipement de protection (2).

10. Dispositif (1) selon l'une des revendications 1 à 9, **caractérisé en ce que** le premier moyen de signalisation (20) présente une forme annulaire, et **en ce que** le moyen d'entraînement (24) est disposé à l'intérieur de la forme annulaire.

11. Dispositif selon la revendication 10, **caractérisé en ce que** le moyen d'entraînement est disposé au centre du premier moyen de signalisation (20).

12. Dispositif (1) selon l'une des revendications 1 à 11, **caractérisé en ce que** le premier moyen de signalisation (20) est disposé dans le logement d'actionneur (10) en retrait vis-à-vis d'une extrémité du moyen d'entraînement (24) tournée vers l'actionneur (12).

13. Dispositif (1) selon l'une des revendications 1 à 12, **caractérisé en ce que** le logement d'actionneur (10) présente un flanc de blocage (32) au moyen duquel l'actionneur (12) peut être verrouillé par complémentarité de forme dans le logement d'actionneur (10), et **en ce que** le verrouillage par complémentarité de forme est actif aussi pendant le déplacement relatif entre l'actionneur (12) et le logement d'actionneur (10).

14. Dispositif (1) selon l'une des revendications 1 à 13, **caractérisé en ce que** la liaison fonctionnelle entre le premier moyen de signalisation (20) du logement d'actionneur (10) et le deuxième moyen de signalisation (22) de l'actionneur (12) est déjà établie lorsque l'actionneur (12) dans le logement d'actionneur (10) n'est pas encore verrouillé.
